# EUROPEAN PATENT APPLICATION

(11) **EP 2 270 651 A1**
(43) Date of publication of application: **05.01.2011**
(21) Application number: 10181327.7
(22) Date of filing: 24.02.2006
(51) Int. Cl.: G06F 9/32, G06F 9/38

(54) **Suppressing update of a branch history register by loop-ending branches**

(30) Priority: 24.02.2005 US 66508
(62) Divisional of application: 06735979.4
(71) Applicant: Qualcomm Incorporated, San Diego, CA 92121-1714 (US)
(72) Inventor: Rychlik, Bohuslav, Morrisville NC 27560 (US)
(74) Representative: Catesby, Olivia Joanne

(57) **Abstract**

A compiler or assembler, comprising a compiler or assembler operative to generate instructions in response to program code; and a loop-ending branch instruction marking function operative to indicate conditional branch instructions that terminate code loops.

## Description

### BACKGROUND

The present invention relates generally to the field of processors and in particular to a method of improving branch prediction by suppressing the update of a branch history register by a loop-ending branch instruction.

Microprocessors perform computational tasks in a wide variety of applications. Improved processor performance is almost always desirable, to allow for faster operation and/or increased functionality through software changes. In many embedded applications, such as portable electronic devices, conserving power is also a goal in processor design and implementation.

Many modem processors employ a pipelined architecture, where sequential instructions, each having multiple execution steps, are overlapped in execution. For improved performance, the instructions should flow continuously through the pipeline. Any situation that causes instructions to stall in the pipeline can detrimentally influence performance. If instructions are flushed from the pipeline and subsequently re-fetched, both performance and power consumption suffer.

Most programs include conditional branch instructions, the actual branching behavior of which is not known until the instruction is evaluated deep in the pipeline. To avoid the stall that would result from waiting for actual evaluation of the branch instruction, modem processors may employ some form of branch prediction, whereby the branching behavior of conditional branch instructions is predicted early in the pipeline. Based on the predicted branch evaluation, the processor speculatively fetches (prefetches) and executes instructions from a predicted address - either the branch target address (if the branch is predicted to be taken) or the next sequential address after the branch instruction (if the branch is predicted not to be taken). When the actual branch behavior is determined, if the branch was mispredicted, the speculatively fetched instructions must be flushed from the pipeline, and new instructions fetched from the correct next address. Prefeteching instructions in response to an erroneous branch prediction can adversely impact processor performance and power consumption. Consequently, improving the accuracy of branch prediction is an important design goal.

Known branch prediction techniques include both static and dynamic predictions. The likely behavior of some branch instructions can be statically predicted by a programmer and/or compiler. One example of branch prediction is an error checking routine. Commonly code executes properly, and errors are rare. Hence, the branch instruction implementing a "branch on error" function will evaluate "not taken" a very high percentage of the time. Such an instruction may include a static branch prediction bit in the op code, set by a programmer or compiler with knowledge of the most likely outcome of the branch condition.

Dynamic prediction is generally based on the branch evaluation history (and in some cases the branch prediction accuracy history) of the branch instruction being predicted and/or other branch instructions in the same code. Extensive analysis of actual code indicates that recent past branch evaluation patterns may be a good indicator of the evaluation of future branch instructions.

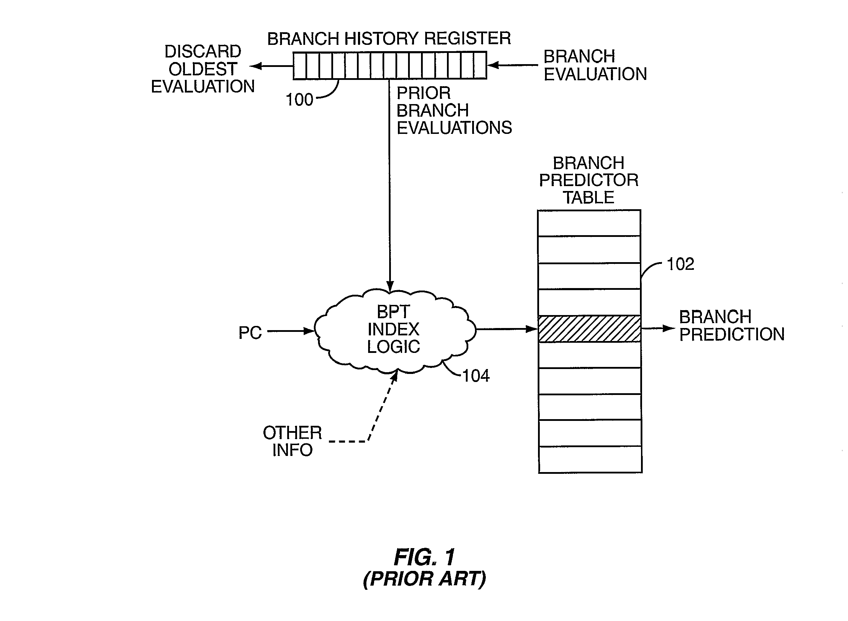

One known form of dynamic branch prediction, depicted in Figure 1, utilizes a Branch History Register (BHR) 100 to store the past *n* branch evaluations. In a simple implementation, the BHR 30 comprises a shift register. The most recent branch evaluation result is shifted in (for example, a 1 indicating branch taken and a 0 indicating branch not taken), with the oldest past evaluation in the register being displaced. A processor may maintain a local BHR 100 for each branch instruction. Alternatively (or additionally), a BHR 100 may contain the recent past evaluations of all conditional branch instructions, sometimes known in the art as a global BHR, or GHR. As used herein, BHR refers to both local and global Branch History Registers.

As depicted in Figure 1, the BHR 100 may index a Branch Predictor Table (BPT) 102, which again may be local or global. The BHR 100 may index the BPT 102 directly, or may be combined with other information, such as the Program Counter (PC) of the branch instruction in BPT index logic 104. Other inputs to the BPT index logic 104 may additionally be utilized. The BPT index logic 104 may concatenate the inputs (commonly known in the art as gselect), XOR the inputs (gshare), perform a hash function, or combine or transform the inputs in a variety of ways.

As one example, the BPT 102 may comprise a plurality of saturation counters, the MSBs of which serve as bimodal branch predictors. For example, each table entry may comprise a 2-bit counter that assumes one of four states, each assigned a weighted prediction value, such as:

11 - Strongly predicted taken

10 - Weakly predicted taken

01 - Weakly predicted not taken

00 - Strongly predicted not taken

The counter increments each time a corresponding branch instruction evaluates "taken" and decrements each time the instruction evaluates "not taken." The MSB of the counter is a bimodal branch predictor; it will predict a branch to be either taken or not taken, regardless of the strength or weight of the underlying prediction. A saturation counter reduces the prediction error of an infrequent branch evaluation. A branch that consistently evaluates one way will saturate the counter. An infrequent evaluation the other way will alter the counter value (and the strength of the prediction), but not the bimodal prediction value. Thus, an infrequent evaluation will only mispredict once, not twice. The table of saturation counters is an illustrative example only; in general, a BHT may index a table containing a variety of branch prediction mechanisms.

Regardless of the branch prediction mechanism employed in the BPT 102, the BHR 100 - either alone or in combination with other information such as the branch instruction PC - indexes the BPT 102 to obtain branch predictions. By storing prior branch evaluations in the BHR 100 and using the evaluations in branch prediction, the branch instruction being predicted is correlated to past branch behavior - its own past behavior in the case of a local BHR 100 and the behavior of other branch instructions in the case of a global BHR 100. This correlation may be the key to accurate branch predictions, at least in the case of highly repetitive code.

Note that Figure 1 depicts branch evaluations being stored in the BHR 100 - that is, the actual evaluation of a conditional branch instruction, which may only be known deep in the pipeline, such as in an execute pipe stage. While this is the ultimate result, in practice, many high performance processors store the predicted branch evaluation from the BPT 102 in the BHR 100, and correct the BHR 100 later as part of a misprediction recovery operation if the prediction turns out to be erroneous. The drawing figures do not reflect this implementation feature, for clarity.

A common code structure that may reduce the efficacy a branch predictor employing a BHR 100 is the loop. A loop ends with a conditional branch instruction that tests a loop-ending condition, such as whether an index variable that is incremented each time through the loop has reached a loop-ending value. If not, execution branches back to the beginning of the loop for another iteration, and another loop-ending conditional branch evaluation. With respect to an *n*-bit BHR 100, there are three cases of interest regarding loops: the loop does not execute; the loop executes through *m* iterations, where *m* < *n*; and the loop executes *m* times, where *m* >= *n.*

If the loop does not execute, a forward branch at the loop's beginning branches over the loop body, resulting in one taken branch evaluation. This has minimal effect on the BHR 100, as the past branch evaluation history in the BHR 100 is displaced by only one branch evaluation (indeed, the prediction accuracy may improve by correlation with this branch evaluation).

If the loop executes through *m* iterations where *m* >= *n*, the "taken" backwards branches of the loop-ending branch instruction saturate the BHR 100. That is, at the end of the loop, an *n*-bit BHR will always contain precisely *n*-*1* ones followed by a single zero, corresponding to a long series of taken evaluations resulting from the loop iterations, and ending with a single not-taken evaluation when the loop terminates. This effectively destroys the efficacy of the BHR 100, as all correlations with prior branch evaluations (for either a local or global BHR 100) are lost. In this case, the BHR 100 will likely map to the same BPT 102 entry for a given branch instruction (depending on the other inputs to the BPT index logic 104), rather than to an entry containing a branch prediction that reflects the correlation of the branch instruction to prior branch evaluations.

Additionally, the saturated BHR 100 may increase aliasing in the BPT 102. That is, all branch instructions following loops with many iterations will map to the same BPT 102 entry, if the BHR 100 directly indexes the BPT 102. Even where the BHR 100 is combined with other information, the chance of aliasing is increased. This adversely impacts prediction accuracy not only for the branch instruction following the loop, but also for all of the branch instructions that alias to its entry in the BPT 102.

If the loop executes through *m* iterations where *m* < n, the BHR 100 is not saturated and some prior branch evaluation history is retained. However, the bits representing the prior branch evaluation history are displaced by *m* bit positions. Particularly where *m* varies, this has two deleterious effects on branch prediction. First, the branch instruction will map to a much larger number of entries in the BPT 102 to capture the same correlation with prior branch evaluations, requiring a larger BPT 102 to support the same accuracy for the same number of branch instructions than would be required without the loop-ending branch affecting the BHR 30. Second, the branch predictors in the BPT 102 will take longer to "train," increasing the amount of code that must execute before the BPT 102 begins to provide accurate branch predictions.

As an example, consider an 8-bit BHR 100 and a code segment with branch instructions A-H, followed by a loop, and then branch instruction X. Branch X strongly correlates with the evaluation history of branches G and H. Various iterations of the intervening loop will generate the BHR results presented in Table 1 below, at the time of predicting X.

**Table 1: BHR 100 Contents Following Various Numbers of Loop Iterations**

| BHR | | | | | | | | comment |
|---|---|---|---|---|---|---|---|---|
| A | B | C | D | E | F | G | H | loop executed once (no initial forward or loopending backward branch taken) |
| B | C | D | E | F | G | H | 1 | loop skipped (one initial forward branch taken) |
| C | D | E | F | G | H | 1 | 0 | 2 iterations (loop-ending backward branch taken once, then not taken) |
| D | E | F | G | H | 1 | 1 | 0 | 3 iterations |
| E | F | G | H | 1 | 1 | 1 | 0 | 4 iterations |
| F | G | H | 1 | 1 | 1 | 1 | 0 | 5 iterations |
| G | H | 1 | 1 | 1 | 1 | 1 | 0 | 6 iterations |

In this example, the desired correlation between the branch instruction X being predicted and the prior evaluation of branches G and H is present in the BHR 100 in each case. However, it is in a different place in the BHR 100, and consequently each case will map to a different BPT 102 entry. This wastes BPT 102 space, increases branch prediction training time, and increases the chances of aliasing in the BPT 102, all of which reduce prediction accuracy.

### SUMMARY

In one or more embodiments, the deleterious effects of storing loop-ending branch instruction evaluations in a BHR are ameliorated by identifying loop-ending branch instructions, and suppressing updating of the BHR in response to the loop-ending instructions. Loop-ending instructions are identified in a variety of ways.

In one embodiment, a branch prediction method includes optionally suppressing an update of a BHR upon execution of a branch instruction, in response to a property of the branch instruction.

In another embodiment, a processor includes a branch predictor operative to predict the evaluation of conditional branch instructions, and an instruction execution pipeline operative to speculatively fetch and execute instructions based on a prediction from the branch predictor. The processor also includes a BHR operative to store the evaluation of conditional branch instructions, and a control circuit operative to suppress storing the evaluation of a conditional branch instruction in response to a property of the branch instruction.

In still another embodiment, a compiler or assembler operative to generate instructions in response to program code includes a loop-ending branch instruction marking function operative to indicate conditional branch instructions that terminate code loops.

### BRIEF DESCRIPTION OF DRAWINGS

Figure 1 is a functional block diagram of a prior art branch predictor circuit.

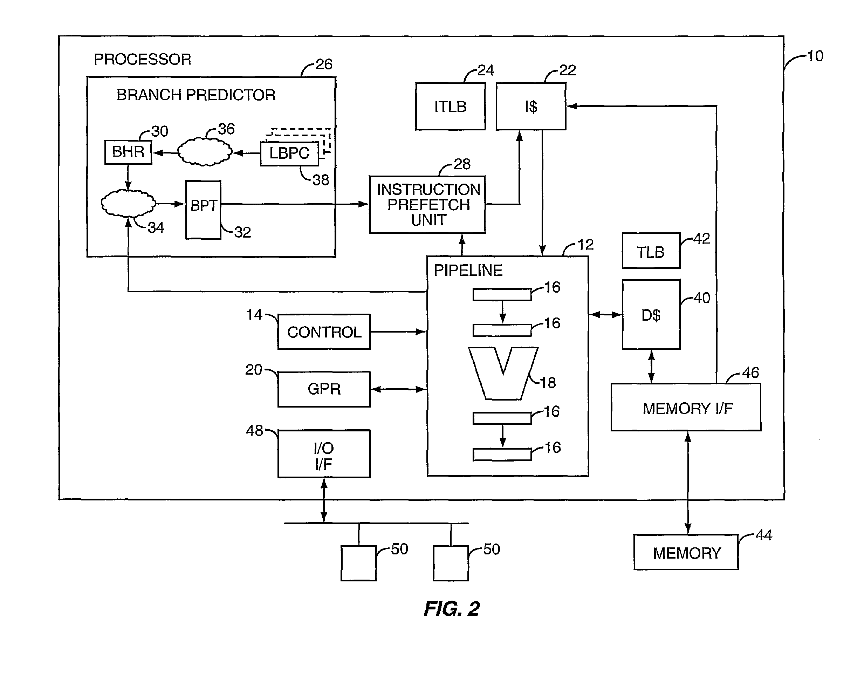

Figure 2 is a functional block diagram of a processor.

Figure 3 is a flow diagram of a method of executing a branch instruction.

Figure 4 is a functional block diagram of a branch predictor circuit including one or more Last Branch PC registers.

### DETAILED DESCRIPTION

Figure 1 depicts a functional block diagram of a processor 10. The processor 10 executes instructions in an instruction execution pipeline 12 according to control logic 14. In some embodiments, the pipeline 12 may be a superscalar design, with multiple parallel pipelines. The pipeline 12 includes various registers or latches 16, organized in pipe stages, and one or more Arithmetic Logic Units (ALU) 18. A General Purpose Register (GPR) file 20 provides registers comprising the top of the memory hierarchy.

The pipeline 12 fetches instructions from an instruction cache (I-cache) 22, with memory address translation and permissions managed by an Instruction-side Translation Lookaside Buffer (ITLB) 24. When conditional branch instructions are decoded early in the pipeline 12, a branch predictor 26 predicts the branch behavior, and provides the prediction to an instruction prefetch unit 28. The instruction prefetch unit 28 speculatively fetches instructions from the instruction cache 22, at a branch target address calculated in the pipeline 12 for "taken" branch predictions, or at the next sequential address for branches predicted "not taken." In either case, the prefetched instructions are loaded into the pipeline 12 for speculative execution.

The branch predictor 26 includes a Branch History Register (BHR) 30, a Branch Predictor Table (BPT) 32, BPT index logic 34, and BHR update logic 36. The branch predictor 26 may additionally include one or more Last Branch PC registers 38, described more fully herein below.

Data is accessed from a data cache (D-cache) 40, with memory address translation and permissions managed by a main Translation Lookaside Buffer (TLB) 42. In various embodiments, the ITLB 24 may comprise a copy of part of the TLB 42. Alternatively, the ITLB 24 and TLB 42 may be integrated. Similarly, in various embodiments of the processor 10, the I-cache 22 and D-cache 40 may be integrated, or unified. Misses in the I-cache 22 and/or the D-cache 40 cause an access to main (off-chip) memory 44, under the control of a memory interface 46.

The processor 10 may include an Input/Output (I/O) interface 46, controlling access to various peripheral devices 50. Those of skill in the art will recognize that numerous variations of the processor 10 are possible. For example, the processor 10 may include a second-level (L2) cache for either or both the I and D caches 22, 40. In addition, one or more of the functional blocks depicted in the processor 10 may be omitted from a particular embodiment.

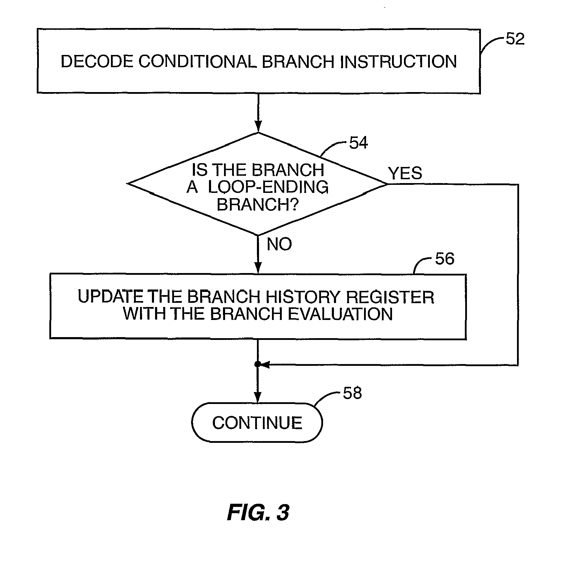

According to one or more embodiments, branch prediction accuracy is improved by preventing loop-ending branches from corrupting one or more BHRs 30 in the branch predictor 26. This process is depicted as a flow diagram in Figure 3. A conditional branch instruction is decoded (block 52). A determination is made whether the branch is a loop-ending branch (block 54). If not, the BHR 30 is updated to record the branch evaluation (block 56), i.e., whether the branch instruction evaluated as "taken" or "not taken." Execution then continues (block 58) at the branch target address or the next sequential address, respectively. If the branch is not a loop-ending branch, updating of the BHR 30 to record the branch evaluation of the loop-ending branch instruction is suppressed (as indicated by the path from block 54 to block 58). In this manner, loop iteration branches do not corrupt the contents of the BHR 30 by displacing relevant branch evaluation history. The query (block 54) - identifying a branch instruction as a loop-ending branch instruction - may be accomplished in a variety of ways.

Loops iterate by branching backwards from the end of the loop to the beginning of the loop. According to one embodiment, every conditional branch instruction with a branch target address less than the branch instruction address, or PC - that is, a backwards branch - is assumed to be a loop-ending branch instruction, and is prevented from updating the BHR 30. This embodiment offers the advantage of simplicity. The branch instruction PC is compared to the branch target address (BTA) when the branch instruction is actually evaluated in the pipeline, at the BHR 30 update time. If BTA < PC, the BHR 30 is not updated. This embodiment suffers the disadvantage of requiring an address comparison when the branch target address is determined, and also that some backward branches that are not loop-ending branches will not have their evaluations recorded in the BHR 30.

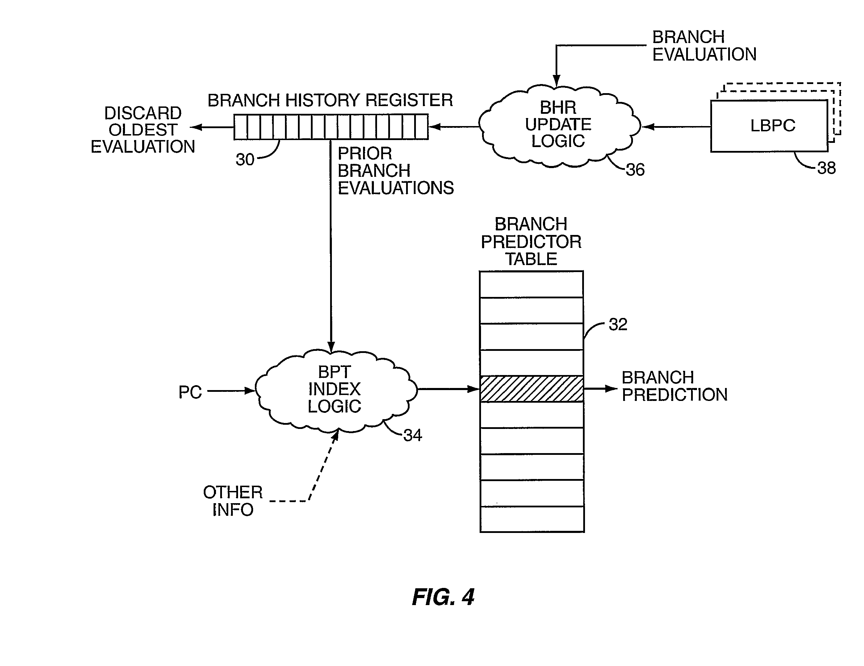

Another way to detect a loop-ending branch is to recognize repeated execution of the same branch instruction. In one embodiment, depicted in Figure 4, a Last Branch PC (LBPC) register 38 stores the PC of the last branch instruction whose evaluation was stored in the BHR 30. In the case of a simple loop, if the PC of a branch instruction matches the LBPC 38 - that is, the branch instruction was the last branch instruction evaluated - the branch instruction is assumed to be a loop-ending branch instruction, and further update of the BHR 30 is suppressed. As discussed above with respect to Fig. 1, while Fig. 4 depicts the contents of the LBPC 38 being compared to the actual branch evaluation in BHR update logic 36, in any given implementation, the LBPC 38 may be compared to a predicted branch evaluation, with the BHR 30 being corrected in the event of a misprediction. This embodiment stores only the first iteration of the loop, displacing only one prior branch evaluation from the BHR 30. This embodiment requires no compiler support, and the direction of the branch does not need to be determined at the BHR 30 update time.

A loop may contain one or more nested loops, or may include other branches within the loop. In this case, saturation of the BHR 30 by an inner loop may be suppressed by the LBPC approach; however, the outer loop-ending branches will still be stored in the BHR 30. In one embodiment, two or more LBPC registers 38 may be provided, with the PCs of successively evaluated branch instructions stored in corresponding LBPC registers (LBPC₀, LBPC₁, ... LBPC_{M}) 38. Updating of the BHR 30 may be suppressed if the PC of a branch instruction matches any of the LBPC_{N} registers 38.

Loop-ending branch instructions may also be statically marked by a compiler or assembler. In one embodiment, a compiler generates a particular type of branch instruction that is only used for loop-ending branches, for example, "BRLP". The BRLP instruction is recognized, and the BHR 30 is never updated when a BRPE instruction evaluates in an execution pipe stage. In another embodiment, a compiler or assembler may embed a loop-ending branch indication in a branch instruction, such as by setting one or more predefined bits in the op code. The loop-ending branch bits are detected, and update of the BHR 30 is suppressed when that branch instruction evaluates in an execute pipe stage. Static identification of loop-ending branches reduces hardware and computational complexity by moving the loop-ending identification function into the compiler or assembler.

A conditional branch instruction has many properties, including for example the branch instruction address or PC, the instruction type, and the presence, vel non, of indicator bits in the op code. As used herein, properties of the branch operation, and/or properties of the program that relate to the branch, are considered properties of the branch instruction. For example, whether the branch instruction PC matches the contents of one or more LBPC registers 38, and whether the branch target address is forward or backward relative to the branch instruction PC, are properties of the branch instruction.

Although the present invention has been described herein with respect to particular features, aspects and embodiments thereof, it will be apparent that numerous variations, modifications, and other embodiments are possible within the broad scope of the present invention, and accordingly, all variations, modifications and embodiments are to be regarded as being within the scope of the invention. The present embodiments are therefore to be construed in all aspects as illustrative and not restrictive and all changes coming within the meaning and equivalency range of the appended claims are intended to be embraced therein.
According to one aspect of the present invention there is provided a branch prediction method, comprising: optionally suppressing an update of a Branch History Register (BHR) upon execution of a branch instruction, in response to a property of the branch instruction.
The property of the branch instruction may be that the branch is backwards. The property of the branch instruction may be that the branch is a loop-ending branch.
The PC of the branch instruction may match the contents of a Last Branch PC (LBPC) register storing the PC of the last branch instruction to update the BHR. The PC of the branch instruction may match the contents of any of a plurality of LBPC registers storing PCs of the last plurality of branch instruction to update the BHR.
The property of the branch instruction may be that the branch instruction is a unique branch instruction generated by a compiler for ending branches or that the branch instruction includes one or more bits indicating it is a loop-ending branch instruction. According to one aspect of the present invention there is provided a processor, comprising: a branch predictor operative to predict the evaluation of conditional branch instructions; an instruction execution pipeline operative to speculatively fetch and execute instructions based on a prediction from the branch predictor; a Branch History Register (BHR) operative to store the evaluation of conditional branch instructions; and a control circuit operative to suppress storing the evaluation of a conditional branch instruction in response to a property of the branch instruction.
The processor may further comprise a Last Branch PC (LBPC) register operative to store the PC of a branch instruction that updates the BHR, and wherein the control circuit is operative to suppress storing the evaluation of a conditional branch instruction if the PC of the branch instruction matches the contents of the LBPC register.
The processor may further comprise a plurality of LBPC registers operative to store PCs of a plurality of branch instruction that update the BHR, and wherein the control circuit is operative to suppress storing the evaluation of a conditional branch instruction if the PC of the branch instruction matches the contents of any LBPC register.
The control circuit may be operative to suppress storing the evaluation of a conditional branch instruction if the branch instruction includes an indication that it is a loop-ending instruction or operative to suppress storing the evaluation of a conditional branch instruction if the branch instruction target address is less than the branch instruction PC. The indication that the branch instruction is a loop-ending instruction may be the instruction type.
According to one aspect of the present invention there is provided a compiler or assembler, comprising: a compiler or assembler operative to generate instructions in response to program code; and a loop-ending branch instruction marking function operative to indicate conditional branch instructions that terminate code loops.
The loop-ending branch instruction marking function may be operative to generate a unique type ofbranch instruction to end each loop. The loop-ending branch instruction marking function may be operative to insert a loop-ending indicator in each conditional branch instruction that ends a loop. The loop-ending indicator may comprise one or more bits inserted in a predetermined filed in the conditional branch instruction op code.
According to one aspect of the present invention there is provided a method of branch prediction using a Branch History Register (BHR) storing evaluations of previous conditional branch instructions, comprising: detecting a loop-ending branch; and suppressing an update of the BHR that would store the evaluation of the associated branch instruction.
Detecting a loop-ending branch may comprise detecting a match between the PC of the associated branch instruction and the contents of a Last Branch PC (LBPC) register storing the PC of the last branch instruction to update the BHR or detecting a match between the PC of the associated branch instruction and the contents of any of a plurality of LBPC registers storing PCs of the last plurality of branch instruction to update the BHR or decoding a unique branch instruction generated by a compiler for ending branches or detecting one or more bits in the associate branch instruction op code indicating it is a loop-ending branch instruction.

## Claims

1. A compiler or assembler, comprising:
a compiler or assembler operative to generate instructions in response to program code; and
a loop-ending branch instruction marking function operative to indicate conditional branch instructions that terminate code loops.

2. The compiler or assembler of claim 1 wherein the loop-ending branch instruction marking function is operative to generate a unique type of branch instruction to end each loop.

3. The compiler or assembler of claim 1 wherein the loop-ending branch instruction marking function is operative to insert a loop-ending indicator in each conditional branch instruction that ends a loop.

4. The compiler or assembler of claim 3 wherein the loop-ending indicator comprises one or more bits inserted in a predetermined filed in the conditional branch instruction op code.

5. A method of compiling program code comprising:
generating instructions in response to program code; and
marking a loop-ending branch instruction to indicate conditional branch instructions that terminate code loops.

6. The method of claim 5 wherein the loop-ending branch instruction marking is a unique type of branch instruction to end each loop.

7. The method of claim 5 wherein the loop-ending branch instruction marking is a loop-ending indicator in each conditional branch instruction that ends a loop.

8. The method of claim 7 wherein the loop-ending indicator is one or more bits in a predefined portion of the conditional branch instruction.
